# EUROPEAN PATENT APPLICATION

(11) **EP 4 563 947 A1**
(43) Date of publication of application: **04.06.2025**
(21) Application number: 23275166.9
(22) Date of filing: 30.11.2023
(51) Int. Cl.: G01D 5/353

(54) **DISTRIBUTED FIBRE OPTIC SENSING**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An apparatus and method for distributed fibre optic sensing. The apparatus comprises: an optical signal generator configured to generate, for transmission into an optical fibre, a first sequence of light pulses and a second sequence of light pulses, the first and second sequences of light pulses offset from one another in time; a detector configured to detect light backscattered from an optical fibre and generate a corresponding output; and a processor. The processor is configured to process the output of the detector and thereby sense mechanical disturbances along an optical fibre by distinguishing, in the detector output, first signals corresponding to pulses of the first sequence of light pulses, from second signals corresponding to pulses of the second sequence of light pulses; and identifying a mechanical disturbance in the optical fibre based on the distinguished first and the second signals.

## Description

### FIELD

The present invention relates to apparatus and methods for distributed fibre optic sensing. More specifically, the present disclosure relates to apparatus and methods for distributed fibre optic sensing of mechanical disturbances along an optical fibre, referred to as distributed strain sensing, and still more specifically referred to distributed acoustic sensing (DAS).

### BACKGROUND

Distributed acoustic sensing (DAS) systems exploit scattering of light along an optical fibre, which reflects a small amount of forward transmitted light back to the light source. A light pulse is transmitted into the fibre from a light source end, and the reflected light received back at the light source end is isolated using an optical circulator and analysed in a detector. By timing the instant at which the reflected light is received at the detector, it is possible to associate the received reflected light with a point along the length of the fibre, according to the round-trip time. This basic principle, known as optical time domain reflectometry, has been used to detect the location of breaks or faults in optical fibres.

In DAS systems, the timing and additionally signal characteristics of the reflected light received at the detector are interrogated to detect energy incident on the fibre, such as acoustic events that impinge on the fibre. One way of interrogating the signal characteristics is known as phase-sensitive coherent optical time-domain reflectometry. Rayleigh scattering centres in the fibre reflect small percentages of a light pulse back toward the light source end of the fibre. The distributed scattering centres are closely spaced compared to the coherence length of the light pulse, so phase changes in the reflected light from the scattering centres can be measured. That is, the spacing of the scattering centres is within the coherence length of the light pulse, so the reflected energy then strongly dependent on the phase length difference between the scattering points, on account of coherent mixing. Distance changes between scattering points, for example perturbations caused by acoustic signals incident on the fibre, change the received signal characteristics at the detector, specifically intensity, which serves to thus detect the acoustic signal.

Each acoustic signal is associated with a particular location along the fibre based on the delay time between the transmission of the light pulse and the return of the light to the detector. However, this places a limit on the DAS system, as the transmitted light pulses must be separated by a period greater than the round-trip time along the fibre to avoid range ambiguity. If more than one pulse is present in the optical fibre, then a detected round-trip time could represent an earlier light pulse reflected from a longer range, or a later light pulse reflected from a closer range. This restriction limits the utility of DAS and similar distributed fibre optic sensing systems, as it restricts the bandwidth of the output by restricting the shortest sampling period, i.e., the time between transmission of consecutive light pulses.

The current invention seeks to address one or more of the technical problems associated with existing apparatus and methods for distributed fibre optic sensing.

### SUMMARY

Providing two distinguishable sequences of light pulses trains simultaneously in an optical fibre, offset in time, allows improved distributed fibre optic sensing to be achieved.

According to an aspect of the present invention, there is provided an apparatus for distributed fibre optic sensing, comprising: an optical signal generator configured to generate, for transmission into an optical fibre, a first sequence of light pulses and a second sequence of light pulses, the first and second sequences of light pulses offset from one another in time; a detector configured to detect light backscattered from an optical fibre and generate a corresponding output; and a processor configured to process the output of the detector and thereby sense mechanical disturbances along an optical fibre, wherein the processing comprises, distinguishing, in the detector output, first signals corresponding to pulses of the first sequence of light pulses, from second signals corresponding to pulses of the second sequence of light pulses; and identifying a mechanical disturbance in the optical fibre based on the distinguished first and the second signals.

Advantageously, this arrangement allows an increased sampling rate of possible mechanical disturbances, and as such a higher sensing bandwidth.

According to another embodiment of the present invention the optical signal generator is configured to generate at least one further sequence of light pulses, up to an nth sequence of light pulses, wherein the n sequences of light pulses are offset from one another in time.

According to another embodiment of the present invention the optical signal generator is configured to generate the sequences such that the time separation between the sequences of light pulses is a multiple of a fixed time delay.

According to another embodiment of the present invention the optical signal generator is configured to generate the sequences such that the time separation of the sequences of light pulses is fraction of the pulse repeat time.

According to another embodiment of the present invention the optical signal generator is configured to generate *n* sequences of light pulses, the time separation of the sequences of light pulses between sequences is 1/n times the pulse repeat time of the first sequence of light pulses. In one example, *n* is 3 or more, for example 10.

According to another embodiment of the present invention the optical signal generator is configured to generate the sequences of light pulses such that separation of pulses in each sequence of light pulses is characterised by a regular pulse repeat time.

According to another embodiment of the present invention the separation of pulses in each sequence of light pulses is characterised by a pulse repeat time that is greater than the maximum round-trip time for a light pulse and its corresponding light backscattered from an optical fibre, in use.

According to another embodiment of the present invention the separation of pulses in each sequence of light pulses is characterised by a pulse repeat time more than 105% of the maximum round-trip time for a light pulse and its corresponding light backscattered from an optical fibre, in use.

According to another embodiment of the present invention the separation of pulses in each sequence of light pulses is characterised by a pulse repeat time less than 110% of the maximum round-trip time for a light pulse and its corresponding light backscattered from an optical fibre, in use.

According to another embodiment of the present invention the optical signal generator is coupled to the detector to provide a timing reference for the detector. For example, the optical signal generator is optically coupled to the detector to pass a timing reference thereto, or alternatively is electrically coupled thereto. According to another embodiment, the optical signal generator comprises a delay unit comprising a bank of delays that apply a time delay ΔT and multiples of ΔT to the output of the pulse train generator to copy its sequences of pulses with such a delay, said delays also being fed to the detector for synchronisation purposes.

According to another embodiment of the present invention the optical signal generator comprises a pulse train generator, the output of the pulse train generator setting the length of pulses in the first sequence of light pulses.

According to another embodiment of the present invention the output of the pulse train generator sets the separation of pulses in the first sequence of light pulses, and the separation of pulses in the second sequence and any further sequences up to the nth sequence of light pulses is based on a delayed copy of said output.

According to another embodiment of the present invention the optical signal generator is configured to generate the sequences of light pulses with one or more distinguishable characteristics selected from a group including: light wavelength; light polarisation; identifiable coding schemas such as orthogonal pulse train codes including Gold codes.

According to another embodiment of the present invention the optical signal generator is configured to generate the sequences of light pulses with different wavelength from each other.

According to another embodiment of the present invention the optical signal generator is configured to generate the sequences of light pulses with light of wavelengths in the range 1520nm and 1640nm.

According to another embodiment of the present invention the optical signal generator is configured to generate the sequences of light pulses with light of with wavelengths separated by 100GHz, or a multiple thereof.

According to another embodiment of the present invention the optical signal generator is configured to generate the sequences of light pulses with light of with wavelengths selected from ITU grids for C-band and/or L-band channels. These are as set out in by the International Telecommunication Union in its standard "Spectral grids for WDM applications: DWDM G.694.1," published in 2020.

According to another embodiment, the detector comprises a demultiplexer arranged to separate reflected light of different wavelengths for processing. In one example, the demultiplexer comprises an arrayed waveguide grating. In one example, the demultiplexer comprises a cascade of thin film filters.

According to another embodiment of the present invention the processor is arranged to identify a mechanical disturbance in the optical fibre. According to another embodiment of the present invention the processor is arranged to identify strain in the optical fibre. According to another embodiment of the present invention the processor is arranged to identify strain in the optical fibre caused by an incident acoustic signal. That is, the acoustic signal mechanically deforms the material of the fibre, and the processor is arranged to recognise the effect of the deformation in the backscattered signal received. In other embodiments, the processor is arranged to identify a mechanical disturbance in the optical fibre such as strain is caused by temperature change in the fibre.

According to another aspect of the present invention, there is provided distributed fibre optic sensing system comprising the apparatus set out herein, coupled to an optical fibre.

According to another aspect of the present invention there is provided a method for distributed fibre optic sensing comprising generating signals for transmission into an optical fibre, the signals generated as a first sequence of light pulses and a second sequence of light pulses, these sequences being offset from one another in time. The method further comprises transmitting the signals into an optical fibre and then detecting, from the optical fibre, backscatter. The method further comprises processing the detected backscatter signals. The processing step comprises sub-steps of distinguishing, in the detected backscatter signal, pulses from the first and second sequences of light pulses, and identifying in the optical fibre mechanical disturbances based on the distinguished first and second signals.

According to another aspect of the present invention there is provided a method for distributed fibre optic sensing, such as distributed acoustic sensing, using the apparatus or system as set out in herein.

### BRIEF DESCRIPTION OF THE FIGURES

Embodiments of the invention will now be described by way of example only with reference to the figures, in which:
Figure 1 shows an apparatus for distributed fibre optic sensing according to an example embodiment of the present invention;
Figure 2 shows a distributed fibre optic sensing system according to an example embodiment of the present invention; and
Figure 3 shows another a distributed fibre optic sensing system according to an example embodiment of to the present invention;
Figure 4 shows another apparatus for distributed fibre optic sensing according to an example embodiment of the present invention; and
Figure 5 shows a flowchart for a method for distributed fibre optic sensing according to an example embodiment of the present invention.

### DETAILED DESCRIPTION

Hereinafter, various examples will be described with reference to the accompanying figures. The examples described below may be modified and implemented in various forms. To describe features of the examples more clearly, detailed descriptions of matters well known to those skilled in the art to which the following examples belong will be omitted.

In the present disclosure, when an element is described as "connected" or "coupled" with another element, this includes not only "directly connected" or "directly coupled", but also "connected with another element therebetween" or "coupled with another element therebetween". In addition, when one element is described to "include" another element, this means that, unless specifically stated otherwise, the one element may further include other elements rather than excluding other elements.

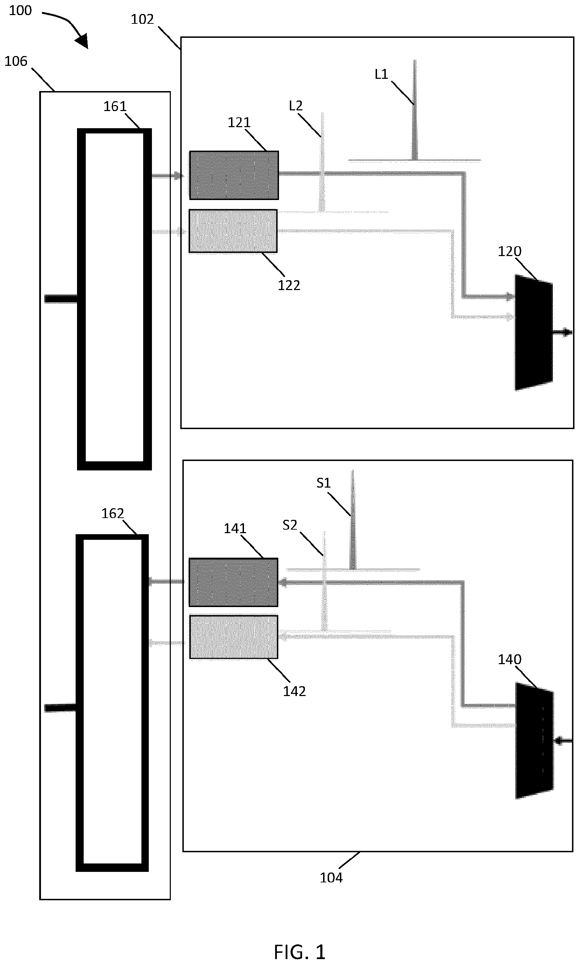

Figure 1 shows an apparatus 100 for distributed fibre optic sensing. The apparatus 100 comprises an optical signal generator 102, a detector 104 and a processor 106. The optical signal generator 102 in use generates first and second sequences of light pulses L1,L2 for transmission from the apparatus 100 into an optical fibre. The first and second sequences of light pulses L1,L2 are offset from one another in time.

Light from the first and second sequences of light pulses L1,L2 is in use backscattered from an optical fibre, and received by the detector 104. The detector in use generates an output corresponding to the received backscattered light.

The processor 106 in use receives the output of the detector 104 and processes it, to thereby sense mechanical disturbances along an optical fibre. Processing by the processor 106 comprises, distinguishing, in the output of the detector 104 output, first signals S1 corresponding to pulses of the first sequence of light pulses L1, from second signals S2 corresponding to pulses of the second sequence of light pulses L2. The processor 106 then identifies a mechanical disturbance in the optical fibre based on first and the second signals S1,S2.

This arrangement allows an increased sampling rate of possible mechanical disturbances, and as such a higher sensing bandwidth, making the apparatus suitable for DAS.

In Figure 1, the optical signal generator 102 is shown schematically to include two signal generating modules 121, 122 which generate the respective first and second sequences of light pulses L1,L2 under timing control of a transmit timing generator 161 within the processor 106, and a multiplexer 120 which combines the first and second sequences of light pulses L1,L2 for transmission to an optical fibre. Similarly, the detector 104 is shown schematically to include two signal detecting modules 141,142 which detect the respective first and the second signals S1, S2 received from an optical fibre and separated by a demultiplexer 140, and which pass the received signal information to a received signal analyser 162 in the processor 106.

In conventional distributed fibre optic sensing, more specifically DAS, a single sequence of light pulses is transmitted into an optical fibre to detect acoustic signals therein. Acoustic signals are associated with a particular location along the fibre based on the delay time between the transmission of the light pulse and the return of the light to the detector. However, this places a limit on the DAS system, as the transmitted light pulses must be separated by a period greater than the round-trip time along the fibre to avoid range ambiguity.

By employing separately distinguishable first and second sequences of light pulses, more than one pulse can be present in the optical fibre at a time, reducing the sampling period, i.e., the time between separate light pulses considering the two the sequences, and thus increasing the achievable sampling bandwidth. That is, time-division multiplexing the light pulses sent into the fibre, and ensuring the returned signals are distinguishable on return of the reflected signals, such as by use of light of different wavelengths, polarisation characteristics or that is encoded with different distinguishable code signatures, e.g. through convolutional coding, CDMA or other correlation-based coding schema, contributes to the increased sampling rate for potential disturbances in an associated optical fibre.

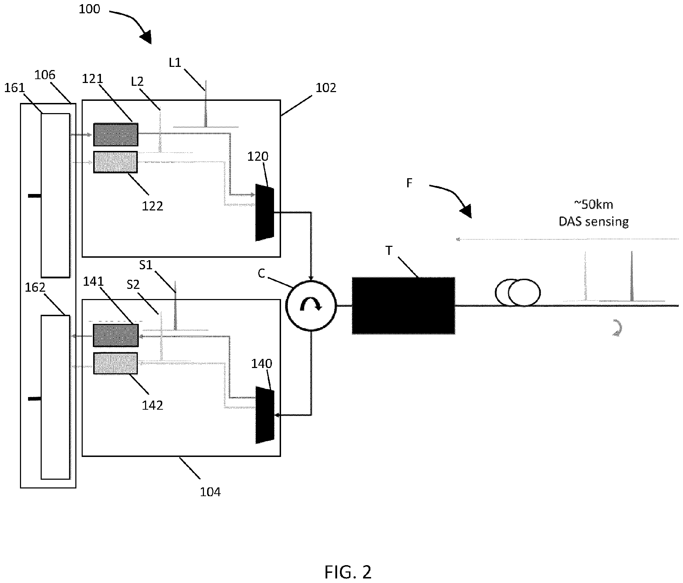

Figure 2 shows a distributed fibre optic sensing system according to the present invention. In Figure 2, the apparatus for distributed fibre optic sensing 100 is coupled to an optical fibre F. Coupling of the apparatus 100 to the optical fibre F is via a fibre terminal T, and an optical circulator C. The fibre terminal T provides the interface with the material of the optical fibre F. The optical circulator C passes the transmitted sequences of light pulses from the optical signal generator 102 of the apparatus 100 into the fibre via the fibre terminal T, and directs the reflected light from the fibre, via the fibre terminal T into the detector 104 of the apparatus 100. As will be appreciated, although the light pulses sent into the optical fibre F are well defined, with sharp transitions at their start and end, the reflected light signals received from the optical fibre F are subject to dispersion as well as the effect of differential scattering on reflection, meaning they will not maintain the same pulse shape as the originally input pulses.

In the example of Figure 2, the apparatus 100 is configured with the processor 106 operating as a DAS system. The optical signal generator 102 is configured to generate the first and second sequences of light pulses L1,L2 that are distinguishable from one another. In this example, the optical signal generator 102 comprises laser signal generators 121,122 that output first and second sequences of light pulses L1,L2 are distinguishable by comprising light of first and second wavelengths. The first and second sequences of light pulses L1,L2 comprise laser light pulses having different wavelengths from one another. The multiplexer 120 and demultiplexer 140 may respectively combine the wavelengths using an arrayed waveguide grating (although simple mixing is also possible) and likewise separate the wavelengths using an arrayed waveguide grating or other components such as a cascade of thin film filters.

In the example of Figure 2, in a fibre of length 50km and refractive index 1.5, the round-trip time is given by twice the fibre length divided by the speed of light in the fibre, approximately (2×(50×10³m))×(1.5/3×10⁸m/s), which corresponds to 500µs. This equates to a maximum sampling frequency of 2×10³ samples/s and consequently the maximum detectable acoustic signal frequency is 1kHz, based on a single optical pulse.

To increase the sensed acoustic bandwidth, example embodiments provide more than one light pulse in the fibre at the same time. By extension of the example above, two distinguishable sequences of light pulses may double the maximum detectable acoustic signal frequency to 2kHz as will be explained in detail below. Furthermore, by extension ten sequences of light pulses in this example would provide a maximum acoustic bandwidth of 10kHz.

An advantage of increasing the bandwidth of a DAS system using an apparatus such as herein described is the increased information available at higher bandwidths. The increased information in the acoustic signals allows for easier classification of detected acoustic signals, such as classification of characteristic engine noise that consequently leads to increased accuracy in determining the likely source of the signal. In addition, seismic events that generate noise in the acoustic frequency range may be better detected and analysed.

Through DAS operation it is further possible to detect the health of remote or locally situated sub-sea power cables, e.g., by detecting the sound of sparking across cable or other infrastructure joints. Again, increased bandwidth allows improves the sensing capability, so that problems can be identified earlier, and corrective action taken before faults become critical.

Although in the example embodiment of Figure 2 a wavelength division multiplexing and demultiplexing approach is used to distinguish, in the output of the detector 104 output, first signals S1 corresponding to pulses of the first sequence of light pulses L1, from second signals S2 corresponding to pulses of the second sequence of light pulses L2, other embodiments are envisaged that to tag the first and second sequences of light pulses L1, L2, for example code division multiplexing or polarisation division multiplexing.

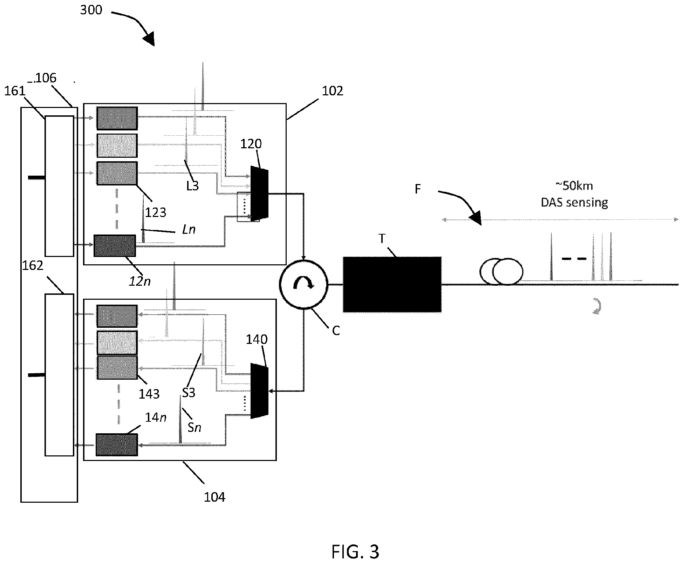

Figure 3 shows another a distributed fibre optic sensing system according to the present invention. In Figure 2, an apparatus for distributed fibre optic sensing 300 is coupled to an optical fibre F. Whereas in Figure 2, the apparatus 100 comprises an optical signal generator 102 that is shown schematically to include only two signal generating modules 121,122, the optical signal generator 102 of the apparatus 300 in Figure 3 comprises first, second, third and through to *n*th signal generating modules 121-12*n*. Correspondingly, *n* sequences of light pulses L1-L*n* are generated under timing control of a transmit timing generator 161 within the processor 106. Likewise in the detector 104, rather than only two signal detecting modules 141, 142 as per Figure 2, the detector 104 of the apparatus 100 shown in Figure 3 comprises first, second, third and through to *n*th signal detecting modules 141-14*n*, arranged to detect the respective first through nth signals S1-S*n* received from an optical fibre. For the sake of clarity, only the third and *n*th additional elements are labelled, the other components/light pulses and signals are as in Figure 2.

The optical signal generator 102 comprises first, second, third and through to nth signal generating modules 121-12*n* that are configured to generate the sequences of light pulses such that separation of pulses in each sequence of light pulses is characterised by a regular pulse repeat time, and the delay between sequences is a fraction of the pulse repeat time, for example a 1/*n*th fraction. In cases with two or three sequences of light pulses, the fraction may be 1/2 and 1/3, such that an even distribution results in these cases also. Furthermore, the separation of pulses in each sequence of light pulses is such that the pulse repeat time is greater than the maximum round-trip time for a light pulse and its corresponding light backscattered from an optical fibre, in use.

In embodiments of the type shown in Figure 3, and corresponding related embodiments, *n* may be zero or one, or for example may be ten or twenty.

For the embodiments of Figures 1, 2, or 3, the optical signal generator 102 is configured to generate sequences of light pulses such that the time separation between each sequence of light pulses is a multiple of a fixed time delay.

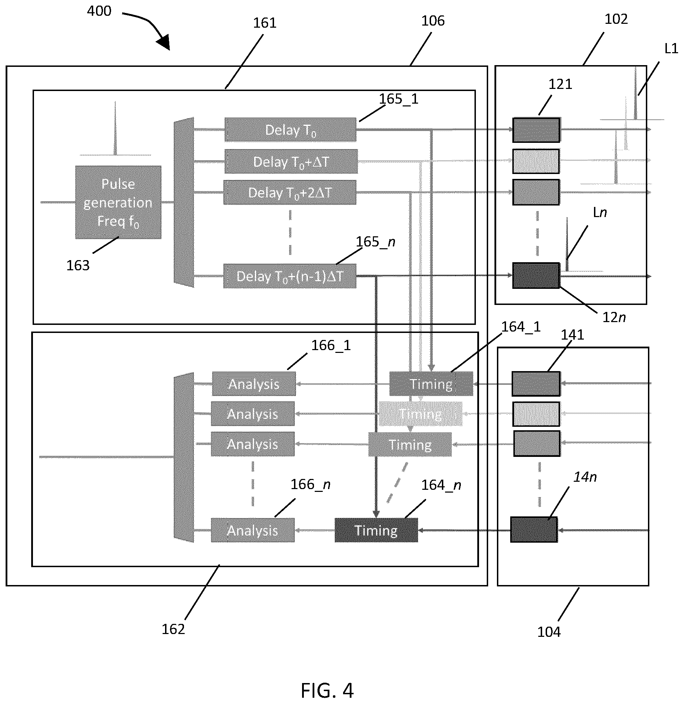

Figure 4 shows another a distributed fibre optic sensing system according to the present invention. Like Figure 3, the optical signal generator 102 of the apparatus 400 in Figure 4 comprises first, second, third and through to *n*th signal generating modules 121-12*n*.

Figure 4 shows a processor 106 in coupled to an optical signal generator 102. The processor 106 uses a fixed time delay to separate the start of each sequence of light pulses L1-L*n*, relative to one another. As will be appreciated, using a predetermined time delay between the start of each sequence of light pulses, for regular sequences L1-L*n*, results in a corresponding delay being present between each of the subsequent pulses in the respective sequences for reflections from the same part of the optical fibre F.

A pulse train generator 163 operates to produce a sequence of pulses of regular length and pulse separation at frequency f₀. A delay unit 165 comprising a bank of delays 165_1 to 165_*n* applies a time delay ΔT and multiples of ΔT to the output of the pulse train generator to copy its sequences of pulses with such a delay, with reference to a time reference T₀. These offset copies are then fed to the first, second, third and through to *n*th signal generating modules 121-12*n*, which in turn output the first and subsequent sequences of light pulses in response. In this embodiment, the first, second, third and through to *n*th signal generating modules 121-12*n* are laser sources operating with different output wavelengths from one another. This approach ensures the timing of the sequences of light pulses can be readily controlled, and that the pulse trains correspond to one another with high reliability.

In the embodiment of Figure 4, the delay ΔT is set by the processor 106 as pulse spacing in the first pulse train divided by the number of signal generating modules 121-12*n*. The output of the delay unit 165 is provided to the received signal analyser 162. The outputs of the bank of delays 165_1-165_*n* are fed to timing units 164_1-164_*n* to provide time references for an associated signal detecting modules 141-14*n*. This connection can be optical, or electrical, and enables gating of outputs of the detecting modules 141-14*n*, such that analysis units 166_1-166_*n* in the wavelength detector can readily determine, in use, the reflection distance of that respective first through nth signals S1-S*n* received from an optical fibre.

It will be noted, that in contrast with the previously described embodiments, the apparatus 400 does not include a multiplexer to combine the sequences of light pulses for transmission to an optical fibre and similarly does not include a demultiplexer to separate out the signals returned from the fibre in use. Standard external components can be used to combine the light pulses, and to separate the signals returned from the fibre, in combination with this embodiment in the same way that the circulator, fibre terminal and indeed fibre are shown as external to the apparatus in Figures 1 through 3.

To facilitate implementation with standard fibre equipment and infrastructure, the optical signal generator is configured to generate the sequences of light pulses with light of wavelengths in the range 1520nm and 1640nm, with the sequences of light pulses having light wavelengths separated by 100GHz and multiples thereof from one another. In a specific implementation, the optical signal generator is configured to generate the sequences of light pulses with light of with wavelengths selected from ITU grids for C-band and/or L-band channels. These are as set out in by the International Telecommunication Union in its standard "Spectral grids for WDM applications: DWDM G.694.1," published in 2020. An extract showing example frequencies and centre wavelengths for suitable ITU channels is given below in Table 1.

**[Table 1]**

| **ITU channel** | **Frequency (THz)** | **Center Wavelength (nm)** |
|---|---|---|
| 61 | 196.1 | 1528.77 |
| 60 | 196.0 | 1529.55 |
| 59 | 195.9 | 1530.33 |
| 58 | 195.8 | 1531.12 |
| 57 | 195.7 | 1531.90 |
| 56 | 195.6 | 1532.68 |
| 55 | 195.5 | 1533.47 |
| 54 | 195.4 | 1534.25 |
| 53 | 195.3 | 1535.04 |
| 52 | 195.2 | 1535.82 |
| 51 | 195.1 | 1536.61 |
| 50 | 195.0 | 1537.40 |
| 49 | 194.9 | 1538.19 |
| 48 | 194.8 | 1538.98 |
| 47 | 194.7 | 1539.77 |
| 46 | 194.6 | 1540.56 |
| 45 | 194.5 | 1541.35 |
| 44 | 194.4 | 1542.14 |
| 43 | 194.3 | 1542.94 |
| 42 | 194.2 | 1543.73 |
| 41 | 194.1 | 1544.53 |
| 40 | 194.0 | 1545.32 |
| 39 | 193.9 | 1546.12 |
| 38 | 193.8 | 1546.92 |
| 37 | 193.7 | 1547.72 |
| 36 | 193.6 | 1548.51 |
| 35 | 193.5 | 1549.32 |
| 34 | 193.4 | 1550.12 |
| 33 | 193.3 | 1550.92 |
| 32 | 193.2 | 1551.72 |
| 31 | 193.1 | 1552.52 |
| 30 | 193.0 | 1553.33 |
| 29 | 192.9 | 1554.13 |
| 28 | 192.8 | 1554.94 |
| 27 | 192.7 | 1555.75 |
| 26 | 192.6 | 1556.55 |
| 25 | 192.5 | 1557.36 |
| 24 | 192.4 | 1558.17 |
| 23 | 192.3 | 1558.98 |
| 22 | 192.2 | 1559.79 |
| 21 | 192.1 | 1560.61 |
| 20 | 192.0 | 1561.42 |
| 19 | 191.9 | 1562.23 |
| 18 | 191.8 | 1563.05 |
| 17 | 191.7 | 1563.86 |

The delay ΔT is for example chosen so that the outgoing light signal pulses in the fibre are evenly spaced. As above, this is achieved if the delay ΔT is the pulse train spacing in the first sequence of light pulses divided by the number of sequences of light pulses. While the pulses will suffer dispersion in fibre, the amount for C-band wavelengths (about 30nm separation) with a round trip in the fibre of 100km is about 54ns. This can be compared with a sample frequency of about 40 kHz or time period of about period of about 25µs for the pulses in each sequence of light pulses. However, if higher sample rates are required then dispersion calibration can be performed, which involves measuring the amount of dispersion, allowing the dispersion effect to be mitigated using timing adjustment relative to the reference pulses from the pulse train generator. Alternatively, the optical fibre itself could include dispersion compensation features. The examples described herein have concentrated on the backscatter from the fibre, as employed by phase-sensitive coherent optical time-domain reflectometry techniques, but it should be appreciated that backscatter in the form of any reflection from the fibre is encompassed by the term.

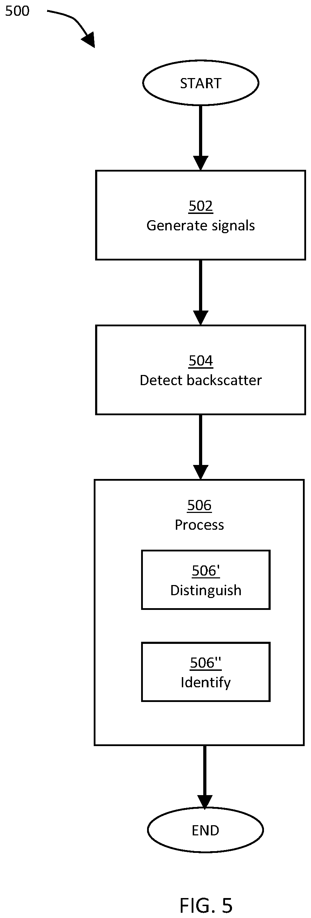

Figure 5 shows, schematically, a method for distributed fibre optic sensing, such as distributed acoustic sensing according to an example embodiment. After the start of the method, signals are generated for transmission into an optical fibre, step 502. The signals are generated as a first sequence of light pulses and a second sequence of light pulses, these sequences being offset from one another in time. From the optical fibre, backscatter is detected, step 504. Processing of the detected backscatter signal is performed, step 506. The processing step 506 comprises sub-steps of firstly distinguishing, in the detected backscatter signal, pulses from the first and second sequences of light pulses, step 506' and then secondly identifying in the optical fibre mechanical disturbances based on the distinguished first and second signals, step 506". After the processing step 506, the method ends.

As will be appreciated, the above-described apparatus is configured to perform said method. Furthermore, the generating step, and related distinguishing step may be performed by wavelength division multiplexing of the first and second sequences of light pulses, or by the other methods mentioned herein.

Reference in the specification to "an example", "an embodiment", "an aspect" or similar language means that a particular feature, structure, or characteristic described in connection with the example is included in at least one example, but not necessarily in other examples. The various instances of the phrase "in one example" or similar phrases in various places in the specification are not necessarily all referring to the same example. In describing and claiming examples disclosed herein, the singular forms "a", "an", and "the" include plural references unless the context clearly dictates otherwise.

While several examples have been described in detail, it is to be understood that the disclosed examples may be modified. Therefore, the foregoing description is to be considered non-limiting. The examples described herein should be considered in a descriptive sense only and not for purposes of limitation. Descriptions of features or aspects within each example should typically be considered as available for other similar features or aspects in other examples. While one or more examples have been described with reference to the figures, it will be understood by those of ordinary skill in the art that various changes in form and details may be made.

## Claims

1. An apparatus (100, 200, 300) for distributed fibre optic sensing, comprising:
an optical signal generator (102) configured to generate, for transmission into an optical fibre, a first sequence of light pulses and a second sequence of light pulses, the first and second sequences of light pulses offset from one another in time;
a detector (104) configured to detect light backscattered from an optical fibre and generate a corresponding output; and
a processor (106) configured to process the output of the detector and thereby sense mechanical disturbances along an optical fibre, wherein the processing comprises,
distinguishing, in the detector output, first signals corresponding to pulses of the first sequence of light pulses, from second signals corresponding to pulses of the second sequence of light pulses; and
identifying a mechanical disturbance in the optical fibre based on the distinguished first and the second signals.

2. The apparatus according to claim 1, wherein the optical signal generator (102) is configured to generate at least one further sequence of light pulses, up to an nth sequence of light pulses, wherein the n sequences of light pulses are offset from one another in time.

3. The apparatus according to claim 1 or claim 2, wherein the optical signal generator (102) is configured to generate the sequences such that the time separation between the sequences of light pulses is a multiple of a fixed time delay.

4. The apparatus according to any one of the preceding claims, wherein the optical signal generator (102) is configured to generate the sequences such that the time separation of the sequences of light pulses is fraction of the pulse repeat time.

5. The apparatus according to any one of the preceding claims, wherein the optical signal generator (102) is configured to generate *n* sequences of light pulses, the time separation of the sequences of light pulses between sequences is *1*/*n* times the pulse repeat time of the first sequence of light pulses.

6. The apparatus according to any one of the preceding claims, wherein the optical signal generator (102) is configured to generate the sequences of light pulses such that separation of pulses in each sequence of light pulses is **characterised by** a regular pulse repeat time, and wherein the separation of pulses in each sequence of light pulses is **characterised by** a pulse repeat time that is greater than the maximum round-trip time for a light pulse and its corresponding light backscattered from an optical fibre, in use.

7. The apparatus according to any one of the preceding claims, wherein the optical signal generator (102) is coupled to the detector to provide a timing reference for the detector.

8. The apparatus according to any one of the preceding claims, wherein the processor (106) comprises a pulse train generator (163), the output of the pulse train generator setting the length of pulses in the first sequence of light pulses.

9. The apparatus according to claim 8, wherein the output of the pulse train generator (163) sets the separation of pulses in the first sequence of light pulses, and the separation of pulses in the second sequence and any further sequences up to the *n*th sequence of light pulses is based on a delayed copy of said output.

10. The apparatus according to any one of the preceding claims, wherein the optical signal generator (102) is configured to generate the sequences of light pulses with one or more distinguishable characteristics selected from a group including: wavelength; polarisation; identifiable coding schemas.

11. The apparatus according to any one of the preceding claims, wherein the optical signal generator (102) is configured to generate the sequences of light pulses with different wavelength from each other.

12. The apparatus of any preceding claim, wherein the processor (106) is arranged to identify a mechanical disturbance in the optical fibre as an acoustic signal incident on an optical fibre.

13. The apparatus of any preceding claim, wherein the detector (104) comprises a demultiplexer arranged to separate reflected light of different wavelengths for processing, by one, or both of an arrayed waveguide grating and a cascade of thin film filters.

14. A distributed fibre optic sensing system comprising the apparatus (100, 200, 300) set out in any preceding claim coupled to an optical fibre (F).

15. A method (500) for distributed fibre optic sensing, such as distributed acoustic sensing, using the apparatus or system as set out in any preceding claim.
